# EUROPÄISCHE PATENTANMELDUNG

(11) **EP 1 860 757 A1**
(43) Veröffentlichungstag der Anmeldung: **28.11.2007**
(21) Anmeldenummer: 07107336.5
(22) Anmeldetag: 02.05.2007
(51) Int. Cl.: H02K 3/28, H02P 1/26, H02P 25/16

(54) **Elektrische Maschine mit Teilwicklungsschaltung**

(30) Priorität: 23.05.2006 DE 102006024241
(71) Anmelder: SIEMENS AKTIENGESELLSCHAFT, 80333 München (DE)
(72) Erfinder: Kaumann, Ulrich, Dr., 97616 Salz (DE); Lyschick, Eduard, 97616 Bad Neustadt (DE)

(57) **Zusammenfassung**

Der Anlauf elektrischer Maschinen soll sicher und kostengünstig gewährleistet werden können. Dazu ist eine elektrische Maschine mit einer ersten Teilwicklung, einer zweiten Teilwicklung, einem Kern, in dessen Nuten die erste und die zweite Teilwicklung eingewickelt sind, und einer Schalteinrichtung zum Verschalten der ersten Teilwicklung mit der zweiten Teilwicklung vorgesehen. In jeder der Nuten (N) ist eine der beiden Teilwicklungen am Nutgrund als Unterlage und die andere Teilwicklung parallel darüber als Oberlage ausgebildet. Die beiden Teilwicklungen sind mit der Schalteinrichtung während des Betriebs der elektrischen Maschine parallel schaltbar. In der Anlaufschaltung ist nur die erste Teilwicklung, die am Nutgrund liegt, stromdurchflossen. In der Betriebsschaltung ist die zweite Teilwicklung zugeschaltet. Damit kann in einer Anlaufschaltung eine symmetrische Feldverteilung erreicht werden. Außerdem treten keine zusätzlichen, durch Oberfelder bedingten Anteile in der Momentenkurve auf, die den Hochlauf behindern könnten.

## Beschreibung

Die vorliegende Erfindung betrifft eine elektrische Maschine mit einer ersten Teilwicklung, einer zweiten Teilwicklung, einem Kern, in dessen Nuten die erste und die zweite Teilwicklung eingewickelt sind, und einer Schalteinrichtung zum Verschalten der ersten Teilwicklung mit der zweiten Teilwicklung. Unter dem Begriff "Teilwicklung" wird im vorliegenden Dokument eine Wicklungseinheit verstanden, die gegebenenfalls aus mehreren Windungen bestehend, an einem Wicklungskopf der Maschine verschaltbar ist.

Während in Europa als Startmaßnahme für Asynchronmotoren zur Verminderung des Anlaufstroms der Stern-Dreieck-Anlauf üblich ist, sind in Amerika so genannte Part-Winding-Schaltungen oder Teilwicklungsanläufe weit verbreitet. Diese Anlaufart hat sich auch in der Kältemaschinentechnik weltweit als Standard durchgesetzt. Bei solchen Part-Winding-Schaltungen bzw. Teilwicklungsschaltungen ist in der Anlaufphase nur ein Teil der Nuten stromdurchflossen. Die auf diese Weise entstehende Widerstands- und Streuungserhöhung gegenüber der Betriebsschaltung, bei der in der Regel sämtliche Nuten stromdurchflossen sind, führt zu einer Anlaufstromreduzierung, mit der natürlich eine entsprechende Momentenreduzierung einhergeht. Der Vorteil dieser Schaltungen gegenüber dem Stern-Dreieck-Anlauf besteht darin, dass der Motor beim Umschalten in die Betriebsschaltung nicht vom Netz getrennt wird, sondern dass die zweite Teilwicklung zu dem durch die erste Teilwicklung bereits "erregten" Motor zugeschaltet wird.

Der Nachteil einer Teilwicklungsschaltung ist die unsymmetrische Feldverteilung in der Anlaufphase, in der nur die erste Teilwicklung eingeschaltet ist, da nur ein Teil der Nuten durchflutet ist. Die dadurch verursachten zusätzlichen Oberfelder führen zu entsprechenden Oberfeldmomenten, die unter Umständen einen vollständigen Hochlauf des Motors verhindern.

Der Motor bleibt dann während des Hochlaufs bei einer Satteldrehzahl "hängen". Dies gilt besonders für die am weitesten verbreitete Teilwicklungsart, bei der die Motorwicklung in zwei völlig identische Teilwicklungen aufgeteilt wird.

Aus der Druckschrift EP 0 238 940 B1 ist eine Anlaufschaltung bekannt, bei der der Nachteil der unsymmetrischen Feldverteilung in der Anlaufphase vermieden werden soll. Bei dieser Schaltung sind jedoch die erste und die zweite Teilwicklung deutlich verschieden und im Betrieb fließen in den Zuleitungen zur jeweiligen Teilwicklung unterschiedlich große Ströme. Dementsprechend sind für die beiden Teilwicklungen unterschiedliche Schaltgeräte erforderlich. Damit sind erhöhte Kosten für die Motoransteuerung verbunden.

Die Aufgabe der vorliegenden Erfindung besteht darin, das vollständige Hochlaufen einer elektrischen Maschine mit einer Anlaufschaltung zu gewährleisten, wobei die Kosten möglichst gering gehalten werden sollen.

Erfindungsgemäß wird die Aufgabe gelöst durch eine elektrische Maschine mit einer ersten Teilwicklung, einer zweiten Teilwicklung, einem Kern, in dessen Nuten die erste und die zweite Teilwicklung eingewickelt sind, und einer Schalteinrichtung zum Verschalten der ersten Teilwicklung mit der zweiten Teilwicklung, wobei in jeder der Nuten eine der beiden Teilwicklungen am Nutgrund als Unterlage und die andere Teilwicklung parallel darüber als Oberlage ausgebildet ist und die beiden Teilwicklungen mit der Schalteinrichtung während des Betriebs der elektrischen Maschine parallelschaltbar sind.

Vorzugsweise sind die beiden Teilwicklungen mit der Schalteinrichtung auch in Reihe schaltbar. Damit kann die elektrische Maschine, falls die Teilwicklungen in Reihe geschaltet sind, für eine höhere Betriebsspannung eingesetzt werden. Für eine niedrigere Betriebsspannung können die Teilwicklungen zur Gewährleistung des entsprechenden Anlaufverhaltens parallelgeschaltet werden.

Die beiden Teilwicklungen können vollkommen gleich ausgebildet werden. Damit ergibt sich im Betrieb eine Aufteilung des Stroms von 50:50, so dass zum Anschalten zwei gleiche Schütze für beide Teilwicklungen verwendet werden können.

Darüber hinaus kann zwischen beiden Teilwicklungen in einer Nut auf eine Teilwicklungszwischenisolation aufgrund der Zugehörigkeit der beiden Teilwicklungen zur selben Wicklungsphase verzichtet werden. Somit lassen sich insgesamt die Herstellungskosten der elektrischen Maschine weiter reduzieren.

Die erfindungsgemäße elektrische Maschine kann als DreiPhasen-Asynchronmotor ausgebildet sein. Dabei kann jeder der drei Phasen je eine erste und zweite Teilwicklung zugeordnet und die Wicklungen der drei Phasen sternförmig miteinander verschaltet sein.

Besonders vorteilhaft ist, wenn alle Nuten des Kerns jeweils eine Teilwicklung als Unterlage und eine Teilwicklung als Oberlage besitzen. Auf diese Weise kann in der Anlaufschaltung eine symmetrische Feldverteilung erzielt werden, so dass keine zusätzlichen, durch Oberfelder bedingten Anteile in der Momentenkurve auftreten, die den Hochlauf behindern könnten.

Die vorliegende Erfindung wird nun anhand der beigefügten Zeichnungen näher erläutert, in denen zeigen:
- FIG 1: eine erfindungsgemäße 4-Pol-Wicklung mit sechs Wicklungsenden;
- FIG 2: eine erfindungsgemäße 4-Pol-Wicklung mit neun Wicklungsenden;
- FIG 3: eine zu der Wicklung von FIG 2 passende Sternschaltung;
- FIG 4: eine der Wicklung von FIG 1 entsprechende Wicklung mit 2 parallelen Wicklungszweigen; und
- FIG 5: eine erfindungsgemäße 2-Pol-Wicklung mit sechs Wicklungsenden.

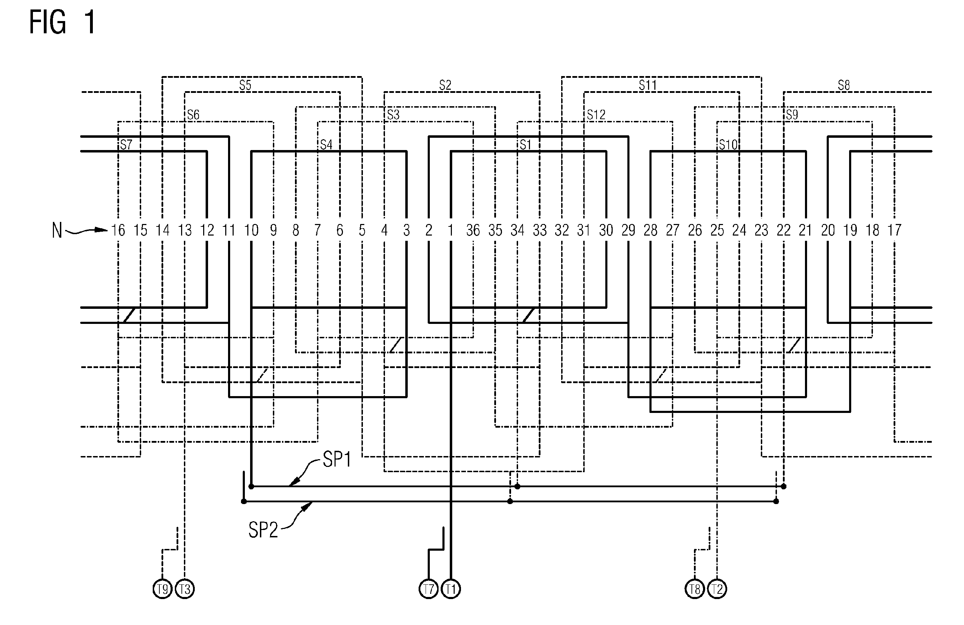

Die nachfolgend näher geschilderten Ausführungsbeispiele stellen bevorzugte Ausführungsformen der vorliegenden Erfindung dar. Die in FIG 1 wiedergegebene 4-Pol-Wicklung besteht hier aus zwölf Spulen S1 bis S12, die in 36 Nuten N eingelegt bzw. eingewickelt sind. Die Spulen S1, S4, S7 und S10 gehören zu einer ersten Phase und sind in der FIG 1 durchgezogen eingezeichnet. Die Spulen S3, S6, S9 und S12 gehören zu einer zweiten Phase und sind mit Strichpunktlinie eingezeichnet. Schließlich gehören die Spulen S2, S5, S8 und S11 zu einer dritten Phase und sind mit gestrichelter Linie in FIG 1 eingezeichnet. Die Spulen jeder Phase sind jeweils zu einer ersten Teilwicklung zusammengeschaltet. Die ersten Teilwicklungen aller drei Phasen münden in einem Sternpunkt SP1. Das jeweils freie Ende der ersten Teilwicklungen ist mit T1, T2 und T3 bezeichnet. Parallel zu jeder der ersten Teilwicklungen verläuft eine jeweils zweite Teilwicklung. Die zweiten Teilwicklungen münden in einem gemeinsamen Sternpunkt SP2 und ihre freien Enden sind mit T7, T8 und T9 bezeichnet.

Die ersten Teilwicklungen mit den Enden T1, T2 und T3 sind jeweils am Nutgrund der entsprechenden Nuten als Unterlage angeordnet. Die zweiten Teilwicklungen mit den Wicklungsenden T7, T8 und T9 sind in den Nuten jeweils als Oberlage, d.h. der Ständerbohrung zugewandt, angeordnet. Somit ergeben sich zwei identische Teilwicklungen, die für eine Part-Winding-Schaltung verwendet werden können.

In der Anlaufschaltung, d.h. in der Schaltung der Wicklungen in der Anlaufphase, sind alle Nuten stromdurchflossen, da die ersten Teilwicklungen, die am Nutgrund liegen, stromdurchflossen sind. Infolgedessen stellte sich eine symmetrische Feldverteilung ein. Die Strom- und Momentenreduzierung im Anlauf entsteht durch die Widerstandserhöhung, denn eine erste Teilwicklung besitzt nur den halben Querschnitt gegenüber der gesamten Wicklung, und die etwas höhere Nutstreuung des Wicklungsteils am Nutgrund. Der unterschiedliche Streuungseinfluss führt in der ersten Teilwicklung am Nutgrund zu einer etwas größeren Strom- und Momentenreduzierung als in der zweiten Teilwicklung an der Ständerbohrung.

In der ersten Teilwicklung werden etwa die gleichen Strom- und Momentenreduzierungen wie bei der Wicklungsart nach der EP 0 238 940 B1 erreicht. Gegenüber der üblichen 50:50-Part-Winding ergeben sich in der Teilwicklung etwas höhere Anlaufströme, dafür aber auch ein deutlich höheres Anlauf- und Beschleunigungsmoment. In der Betriebsschaltung, d. h. mit zugeschalteter zweiter Teilwicklung, ist der Einfluss der unterschiedlichen Nutstreuung in den beiden Teilwicklungen nur gering, es stellen sich praktisch gleiche Ströme in den Zuleitungen zu den Teilwicklungen ein.

In vorteilhafter Weise ergibt die erfindungsgemäße Part-Winding-Schaltung im Betrieb die bei der gebräuchlichen 50:50-Part-Winding übliche gleichmäßige Stromteilung. Die den Hochlauf gefährdenden Sattelmomente in der Teilwicklungsschaltung werden jedoch vermieden. Das Startverhalten entspricht dem der Schaltung nach EP 0 238 940 B1, jedoch stellt sich hier im Betrieb eine gleichmäßige Stromaufteilung ein.

Die erfindungsgemäße Wicklung lässt sich ähnlich kostengünstig als so genannte Wiederholwicklung herstellen, wie dies auch bei der Wicklung nach der EP 0 238 940 B1 der Fall ist. Insbesondere ist keine Zwischenisolierung in den Nuten erforderlich, da alle Leiter in einer Nut zum selben Strang gehören. Die erfindungsgemäße Wicklung erfordert jedoch weniger Schaltaufwand als die Wicklung nach der EP 0 238 940 B1.

Die genannten Vorteile lassen sich auch für andere Wicklungen nutzen. Insbesondere ist man nicht auf Maschinen mit 36 Nuten und vier Pole beschränkt. Nachfolgend sind daher weitere Ausführungsbeispiele dargestellt.

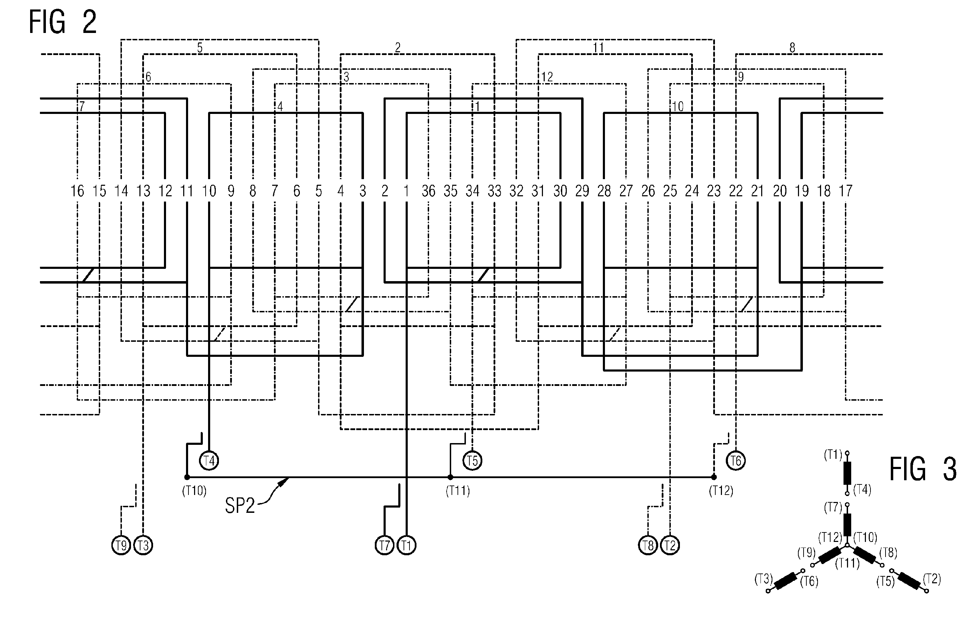

Die in FIG 2 wiedergegebene Wicklung entspricht im Wesentlichen der von FIG 1. Die ersten Teilwicklungen mit den Wicklungsenden T1, T2 und T3 sind hier jedoch nicht an ihren anderen Enden in einem gemeinsamen Sternpunkt verschaltet. Vielmehr sind die anderen Enden, hier die Wicklungsenden T4, T5 und T6 ebenfalls frei und mit einer Schalteinrichtung verschaltbar. Die parallelen Teilwicklungen mit den freien Enden T7, T8 und T9 sind hingegen nach wie vor in dem gemeinsamen Sternpunkt SP2 verschaltet. Dieser entspricht dann den fiktiven Wicklungsenden T10, T11 und T12. Das entsprechende Schaltungsdiagramm ist in FIG 3 wiedergegeben. Die Wicklung besitzt demnach neun Wicklungsenden T1, T4, T7 und T2, T5, T8 sowie T3, T6, T9. Damit kann die Wicklung für einen Motor verwendet werden, der beispielsweise in einer Doppelsternschaltung an eine Betriebsspannung von 230 V und in einer Sternschaltung an eine Betriebsspannung von 460 V betrieben werden kann. Außerdem ist bei 230 V auch der Part-Winding-Anlauf möglich. Somit ist die Wicklung von FIG 2 nicht nur für spannungsumschaltbare Motoren, sondern auch für Part-Winding-Anläufe geeignet.

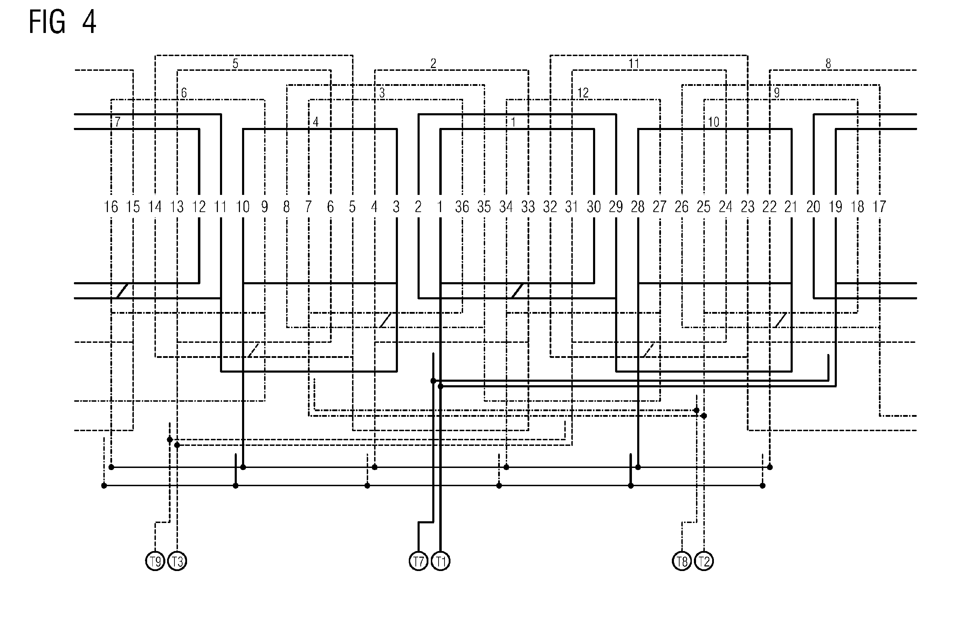

Die in FIG 4 wiedergegebene Wicklung entspricht der von FIG 1, jedoch ist die Wicklung mit 2 parallelen Wicklungszweigen ausgeführt. Dadurch ist, besonders bei kleinen Werten der Leiterzahl pro Nut (Windungszahl), eine feinere Wicklungsanpassung möglich.

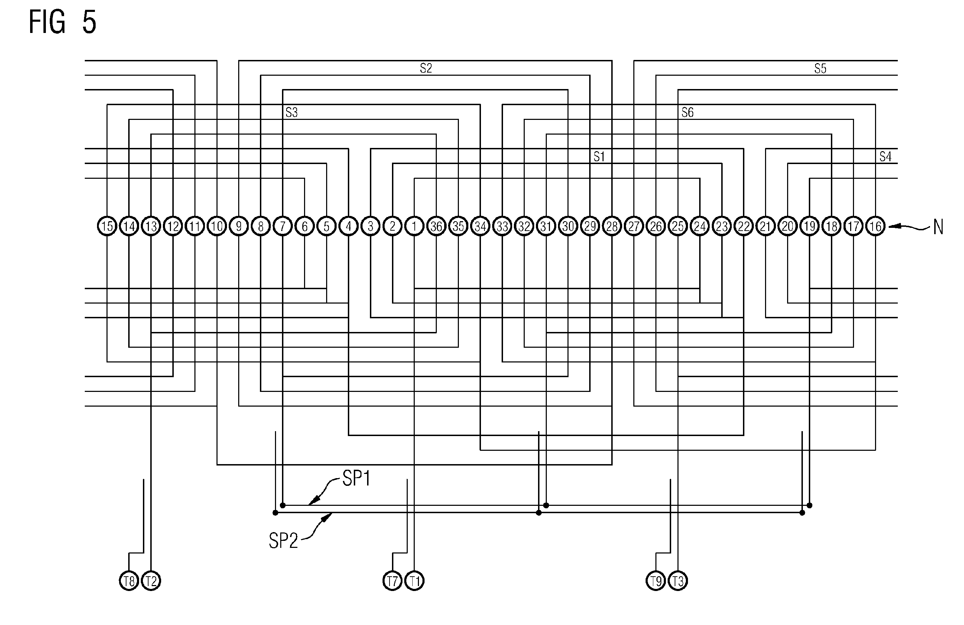

Ein weiteres Ausführungsbeispiel der Wicklung einer erfindungsgemäßen elektrischen Maschine ist in FIG 5 dargestellt. Es handelt sich dort um eine 2-polige Drehstromwicklung. Demnach sind in den 36 Nuten N die sechs Spulen S1 bis S6 untergebracht. Jede der Wicklungen bzw. Spulen ist mit zwei parallelen Drähten ausgeführt. Demnach ergeben sich wieder sechs Teilwicklungen, wobei sich die ersten Teilwicklungen mit den freien Enden T1, T2 und T3 in dem gemeinsamen Sternpunkt SP1 und die zweiten Teilwicklungen mit den freien Wicklungsenden T7, T8 und T9 in dem zweiten Sternpunkt SP2 treffen.

## Patentansprüche

1. Elektrische Maschine mit
- einer ersten Teilwicklung,
- einer zweiten Teilwicklung,
- einem Kern, in dessen Nuten (N) die erste und die zweite Teilwicklung eingewickelt sind, und
- einer Schalteinrichtung zum Verschalten der ersten Teilwicklung mit der zweiten Teilwicklung,
**dadurch gekennzeichnet , dass**
- in jeder der Nuten (N) eine der beiden Teilwicklungen am Nutgrund als Unterlage und die andere Teilwicklung parallel darüber als Oberlage ausgebildet ist und
- die beiden Teilwicklungen mit der Schalteinrichtung während des Betriebs der elektrischen Maschine parallelschaltbar sind.

2. Elektrische Maschine nach Anspruch 1, wobei die beiden Teilwicklungen mit der Schalteinrichtung in Reihe schaltbar sind.

3. Elektrische Maschine nach Anspruch 1 oder 2, wobei die beiden Teilwicklungen vollkommen gleich ausgebildet sind.

4. Elektrische Maschine nach einem der vorhergehenden Ansprüche, wobei zwischen den beiden Teilwicklungen in einer Nut keine Teilwicklungszwischenisolation vorhanden ist.

5. Elektrische Maschine nach einem der vorhergehenden Ansprüche, die als 3-Phasen-Asynchronmotor ausgebildet ist.

6. Elektrische Maschine nach Anspruch 5, wobei jeder der drei Phasen je eine erste und zweite Teilwicklung zugeordnet sind und die Wicklungen der drei Phasen sternförmig miteinander verschaltet sind.

7. Elektrische Maschine nach einem der vorhergehenden Ansprüche, wobei alle Nuten des Kerns jeweils eine Teilwicklung als Unterlage und eine Teilwicklung als Oberlage besitzen.
